# EUROPEAN PATENT APPLICATION

(11) **EP 1 995 590 A1**
(43) Date of publication of application: **26.11.2008**
(21) Application number: 08156681.2
(22) Date of filing: 21.05.2008
(51) Int. Cl.: G01N 27/90

(54) **Method and apparatus for digital measurement of an eddy current signal**

(30) Priority: 23.05.2007 US 752698
(71) Applicant: GE Inspection Technologies, LP, Lewistown, PA 17044 (US)
(72) Inventor: Cuffe, John M., Reedsville, PA 17084 (US); Feydo, Mark H., Reedsville, PA 17084 (US)
(74) Representative: Illingworth-Law, William Illingworth

(57) **Abstract**

A method and apparatus for conducting eddy current testing of a test object is disclosed, comprising the steps of generating a digital drive signal, converting the digital drive signal to an analog drive signal to drive a coil in a probe; placing the probe in proximity to a test object; receiving an electromagnetic field generated by the test object, which generates an analog return signal; converting the analog return signal to a digital return signal; measuring the amplitude of the digital return signal; measuring the phase shift of the digital return signal compared to the digital drive signal; determining the phase shift angle of the digital return signal based on the phase shift; determining the quadrature components of the digital return signal based on the digital return signal amplitude and the phase shift angle; and analyzing the quadrature components of the digital return signal to determine a material characteristic of the test object.

## Description

### BACKGROUND OF THE INVENTION

This invention generally relates to measurement of eddy current signals using digital signal processing techniques.

In nondestructive eddy current testing, an oscillator or other signal generator produces an alternating current (AC) drive signal (e.g., a sine wave) that drives a coil of an eddy current probe placed in close proximity to an electrically conductive test object. The drive signal in the probe coil produces an electromagnetic field, which penetrates into the electrically conductive test object and induces eddy currents in the test object, which in turn generate their own electromagnetic field. The frequency of the drive signal as well as material properties of the test object (e.g., electrical conductivity, magnetic permeability, etc.) determines the depth that a particular electromagnetic field penetrates the test object, with lower frequency signals penetrating deeper than higher frequency signals. For most inspection applications, eddy current probe frequencies in the range 1kHz to 3MHz are used.

The electromagnetic field generated by the eddy currents generates a return signal in the eddy current probe. Comparison of the drive signal to the return signal can provide information regarding the material characteristics of the test object, including the existence of flaws or other defects at a particular depth. Placing the eddy current probe over a section of the test object that is known to have no flaws or defects results in the creation of a return signal that can be used to establish a reference or null signal. Determining the differences (e.g., phase shift) between the drive signal and this reference or null signal establishes reference data against which subsequent measurements of unknown sections of the test object may be made.

These subsequent measurements of unknown sections of the test object can be made by sliding the eddy current probe along the surface of the test object and continually monitoring the differences between the drive signal and the return signal generated by the eddy current electromagnetic field. To the extent that the differences between the drive signal and the return signal are not consistent with the differences between the drive signal and the reference or null signal, that may indicate the presence of a flaw or other defect (or other change in material characteristics) at that location in the test object. To help simplify the often complex eddy current response, changes in amplitude and phase are often displayed on an impedance plane diagram (a plot of system inductance against resistance). In this way, changes in operator variability, such as the distance between the probe and the test piece (lift-off) will cause a horizontal shift in the spot forming the trace, while the presence of any flaws causes the spot to shift vertically. In any event, a critical step in eddy current testing is determining the differences (e.g., phase shift) between the drive signal and return signal.

Analog methods for determining the differences between the drive signal and return signal in eddy current testing are well known. In one widely used method, one or more oscillators are used to generate a sine signal and a cosine signal having the same frequency and amplitude as the drive signal. After passing through low pass filters, each of the sine and cosine signals is mixed or multiplied with the return signal, which has been amplified prior to the mixing or multiplication. Each of the resulting signals from the multipliers contain the sum and difference products of the two signals that were multiplied and contain the amplitude and phase information of the difference signal based on the test object return signal. Those resulting signals are then low pass filtered to remove all but the difference frequencies and any low harmonic products. After summing and amplifying the resulting signals, the signals represent the quadrature signals of the difference between the drive signal and the return signal, from which the phase and amplitude of that difference signal can be derived. The quadrature signals are multiplexed, passed through an analog to digital converter, and then received by a computer or other processor to analyze the signals and determine the presence of a flaw or other defect.

Digital circuitry has several inherent advantages over analog circuitry, including a reduced number of components, which may result in reduced manufacturing costs, and the elimination or minimization of the potential impact caused by variations in component tolerances. Given these advantages, with advent of the digital signal processing, others have replaced the analog circuitry and operations described above with digital circuitry. While this change may improve the performance and cost of the application, the digital circuitry still must perform the calculations of multiplying the return signal with the sine and cosine signals to produce quadrature outputs, which are then analyzed to determine the phase and amplitude of the difference signal. It would be advantageous to use digital signal processing techniques to perform eddy current testing without the need to multiply the return signal with the sine and cosine signals.

### BRIEF DESCRIPTION OF THE INVENTION

In one embodiment of the present invention, a method and apparatus for conducting eddy current testing of a test object is disclosed, comprising the steps of generating a digital drive signal, converting the digital drive signal to an analog drive signal to drive a coil in a probe; placing the probe in proximity to a test object; receiving an electromagnetic field generated by the test object, which generates an analog return signal; converting the analog return signal to a digital return signal; measuring the amplitude of the digital return signal; measuring the phase shift of the digital return signal compared to the digital drive signal; determining the phase shift angle of the digital return signal based on the phase shift; determining the quadrature components of the digital return signal based on the digital return signal amplitude and the phase shift angle; and analyzing the quadrature components of the digital return signal to determine a material characteristic of the test object.

### BRIEF DESCRIPTION OF THE DRAWINGS

Embodiments of the present invention will now be described, by way of example only, with reference to the accompanying drawings, in which:
FIG. 1 is a block diagram of a digital circuit used to perform eddy current testing.

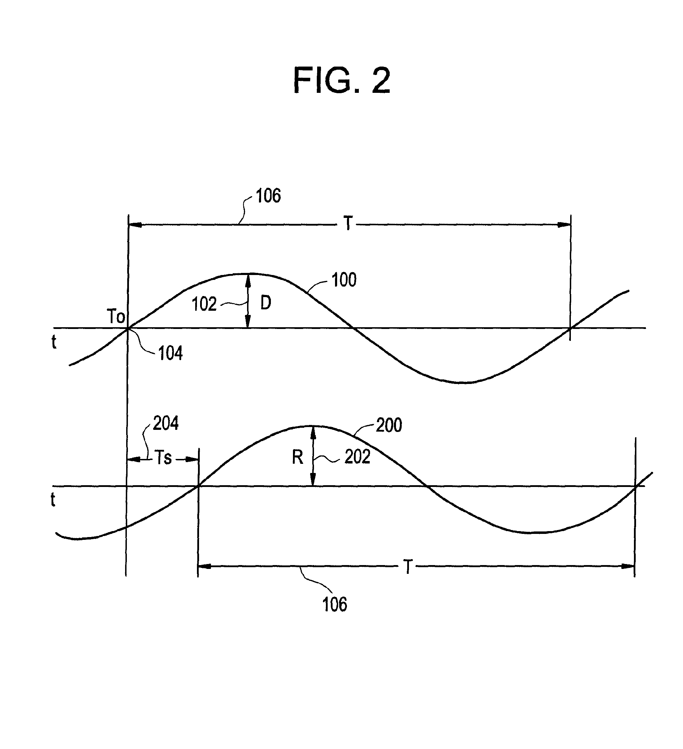

FIG. 2 is a plot of a typical drive signal and return signal in eddy current testing.
FIG. 3 is vector representation of the amplitude and phase shift angle of a return signal in eddy current testing.
FIG. 4 is an impedance plane display for displaying the results of eddy current testing.

### DETAILED DESCRIPTION OF THE INVENTION

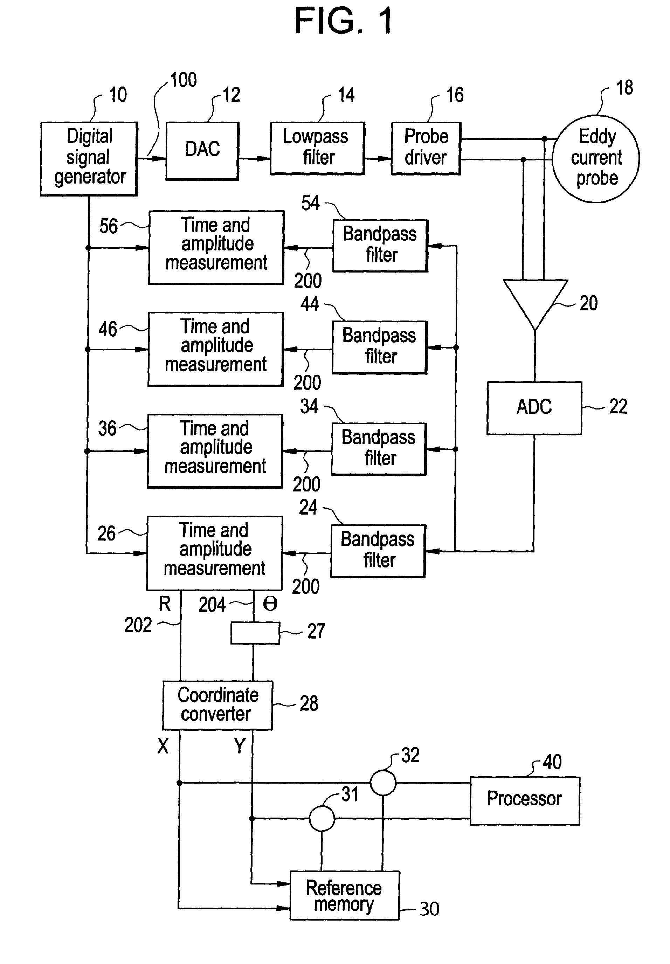

FIG. 1 shows a block diagram of a digital circuit used to perform eddy current testing using digital signal processing methods. A digital signal generator or waveform synthesizer 10 can generate a digital drive signal 100. The digital drive signal 100 can be a single frequency signal or multiple frequency signal depending on the whether inspection of one or more depths or other parameters in a test object is required. As shown in FIG. 1, the digital drive signal 100 has a measurable amplitude (D) 102 and selected time reference (T0) 104, which can be used for later comparison with the digital return signal 200. The amplitude can be measured as a peak value or as a peak to peak value. The digital drive signal 100 is then passed through a digital to analog converter (DAC) 12, creating the analog drive signal that is then passed through a low pass filter 14. The filtered analog drive signal is then received by a probe driver 16, which drives a coil (not shown) in the eddy current probe 18. The eddy current probe 18 generates an electromagnetic field, which, when placed in close proximity to an electrically conductive test object (not shown), penetrates into the test object and induces eddy currents in the test object, which in turn generate their own electromagnetic field.

The electromagnetic field generated by the eddy currents generates an analog return signal in the eddy current probe 18. The analog return signal is received by the eddy current probe 18 and then amplified by an amplifier 20, passed through an analog to digital converter (ADC) 22, and then passed through one or more band pass filters 24, creating the digital return signal 200. Since the frequency of the drive signal determines the depth that a particular electromagnetic field penetrates the test object, to the extent that a multiple frequency drive signal is used, multiple band pass filters 24 can be used to isolate the data from different depths of the test object or to compensate for lift off. Digital devices can be used to provide the function of the band pass filters 24 (i.e., isolating a frequency or narrow band of frequencies of interest). As with the digital drive signal 100, the digital return signal 200 for a particular frequency or band of frequencies has a measurable amplitude (R) 202 and measurable time or phase shift (Ts) 204 when compared to the time reference (To) 104 of the digital drive signal 100 for that frequency or band of frequencies. The amplitude can be measured as a peak value or as a peak to peak value. Both the digital drive signal 100 and digital return signal 200 can have the same period (T) 106.

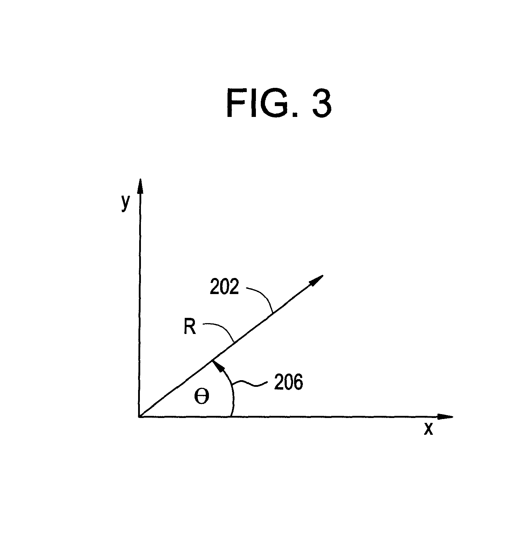

FIG. 3 shows a vector representation of the amplitude (R) 202 and phase shift angle (θ) 206 of the digital return signal 200. As shown in FIG. 1, the time and amplitude measurement device 26 determines the amplitude (R) 202 and phase shift angle (θ) 206 of the digital return signal 200 and can be implemented using any one of several digital devices, including a FPGA, a DSP or other digital devices. The phase shift angle (θ) 206 of the digital return signal 200 can be determined by calculating the ratio of the time or phase shift (Ts) 204 of the digital return signal 200 over the period (T) 106 and then multiplying that ratio by 360°. The amplitude (R) 202 of the digital return signal 200 can be measured directly by determining the peak or peak to peak value of the signal.

The amplitude (R) 202 and phase shift angle (θ) 206 of the digital return signal 200 can be processed in polar form directly or can be converted to X,Y coordinates as is the more conventional eddy current method. Knowledge of the amplitude and phase angle of a signal enables calculation of the quadrature (sine and cosine) components (X and Y) of that signal. A coordinate converter 28 can convert the amplitude (R) 202 and phase shift angle (θ) 206 of the digital return signal 200 to quadrature form by multiplying the amplitude (R) 202 by the cosine and the sine of the phase shift angle (θ) 206 respectively.

Since the frequency of the drive signal determines the depth that a particular electromagnetic field penetrates the test object, with lower frequency signals penetrating deeper than higher frequency signals, in order to perform eddy current testing at multiple depths in the test object, the digital signal generator or waveform synthesizer 10 of FIG. 1 can provide a digital drive signal 100 at multiple frequencies. The particular depth of interest can be chosen by analyzing digital return signal 200 and the digital drive signal 100 for the frequency corresponding to that depth. Multiple-frequency analysis can be performed by providing multiple band pass filters 34, 44, 54, and time and amplitude measurement blocks 36, 46, 56 to determine the amplitude (R) 202 and phase shift angle (θ) 206 for the digital return signals 200 for the relevant frequencies. The measured amplitude (R) 202 and phase shift angle (θ) 206 of the digital return signals 200 are passed to a computer or other processor 40 where they are analyzed to determine the presence of a flaw or defect in the test object or other change in material characteristics.

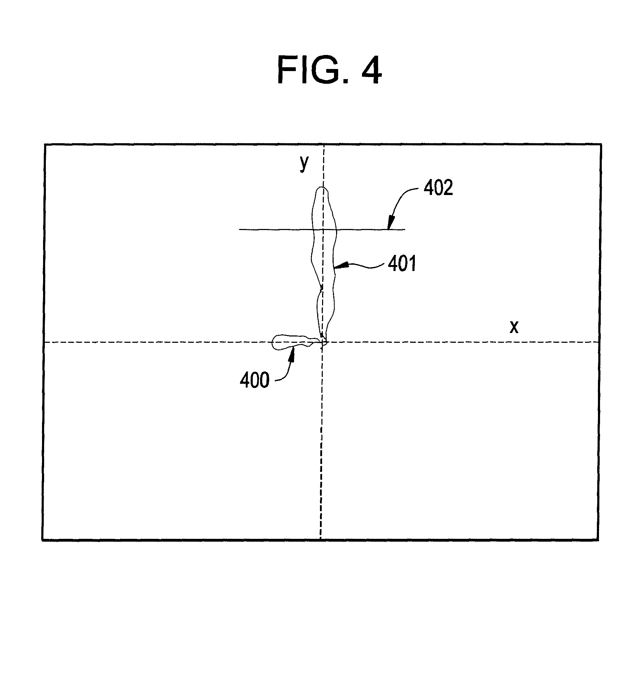

In a typical eddy current system, the results of an eddy current measurement are shown in the impedance plane and on a display 403 viewed by a user as shown in FIG. 4. This display 403 may be a computer screen or similar device. As the eddy current probe 18 is moved over a test object, a visual indicator or spot on the display 403 moves based on the measured amplitude (R) 202 and phase shift angle (θ) 206 of the digital return signal 200. Since the display 403 has persistence, the recent movements of the spot can be observed. As was previously stated, in the impedance plane display 403, defects in the test object can be distinguished from eddy current probe 18 lift-off by the fact that lift off causes the spot to move orthogonally to movement caused by defects. This difference can be optimized by probe frequency selection. In FIG. 4, the response from the probe 18 lifting off the test object is shown as 400. The response to a defect is shown as 401.

It is desirable to have a fixed location (e.g., the center) of the impedance plane display 403 to represent the eddy current measurement of a location on the object that is free from flaws or defects. To do this, it is necessary to generate an analog return signal or digital return signal at this location, which is referred to as a null signal. This null signal or its measured values (e.g., amplitude and phase shift angle or quadrature components) can then be stored and effectively subtracted from subsequently generated analog return signals or digital return signals for unknown locations. This subtraction can be accomplished in several ways, including injecting a signal that is equal and opposite to the null signal to the subsequently generated analog return signals or digital return signals for unknown locations.

Subtracting or injecting the null signal can be done at any point in the signal chain. For example, as shown in FIG. 1, the quadrature components of the amplitude and phase shift angle of the null signal are stored in reference memory 30. During subsequent testing, these values are automatically subtracted from the quadrature components of the amplitude (R) 202 and phase shift angle (θ) 206 of the digital return signals 200 using subtracters or adders 31, 32. Alternatively, a signal that is equal and opposite to the null signal can be injected to the analog return signal prior to conversion by the ADC 22.

It is also convenient to adjust the displayed data so that lift off causes the spot to move horizontally and defects cause the spot to move vertically. In this way a simple threshold 402 can be set, representing the maximum allowable response before a defect is reported. Automatic evaluation of the amplitude (R) 202 and phase shift angle (θ) 206 of the digital return signal 200 can be performed in this way. If the visual indicator or spot exceeds a threshold 402 in the vertical direction, an alarm can be set or other actions taken by the computer or other monitoring circuits. In order to adjust the display 403 to align the responses to lift off and defects with the X and Y axes, a constant can be added or subtracted to the phase shift angle (θ) 206 of the digital return signal (200). This can be accomplished using a phase rotation device 27 to add or subtract a constant to the phase shift angle (θ) 206 as shown in FIG. 1.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method for conducting eddy current testing of a test object comprising the steps of:
generating a digital drive signal;
converting said digital drive signal to an analog drive signal, said analog drive signal driving a coil in a probe;
placing said probe in proximity to said test object;
receiving an electromagnetic field generated by said test object, said electromagnetic field generating an analog return signal;
converting said analog return signal to a digital return signal;
determining the amplitude of said digital return signal;
determining the phase shift angle of said digital return signal based on the phase shift of said digital return signal compared to said digital drive signal;
determining the quadrature components of said digital return signal based on said digital return signal amplitude and said phase shift angle; and
analyzing said quadrature components of said digital return signal to determine a material characteristic of said test object.

2. The method of claim 1, further comprising the step of displaying a visual indicator of said material characteristic on an impedance plane.

3. The method of claim 1 or claim 2, further comprising the step of filtering the digital return signal to isolate a first band of frequencies from said digital return signal.

4. An apparatus for conducting eddy current testing of a test object comprising:
a digital signal generator, wherein said digital signal generator generates a digital drive signal;
an digital to analog converter, wherein said analog to digital converter converts said digital drive signal to an analog drive signal;
a probe, wherein said probe transmits a first electromagnetic field generated by said analog drive signal and receives a second electromagnetic field generated by said test object;
an analog to digital converter, wherein said converter converts the analog return signal generated by said electromagnetic field to a digital return signal;
a time and amplitude measurement device, wherein said time and amplitude measurement device determines the amplitude of said digital return signal and the phase shift angle of said digital return signal based on the phase shift of said digital return signal compared to said digital drive signal;
a coordinate converter, wherein said coordinate converter determines the quadrature components of said digital return signal based on said digital return signal amplitude and said phase shift angle; and
a processor for analyzing said quadrature components of said digital return signal to determine a material characteristic of said test object.

5. The apparatus of claim 4, further comprising a display, wherein said display provides a visual indicator of said material characteristic on an impedance plane.

6. The apparatus of claim 4 or claim 5, wherein said signal generator is a waveform synthesizer.

7. The apparatus of any one of claims 4 to 6, further comprising a first band pass filter, wherein said first band pass filter isolates a first band of frequencies from said digital return signal.

8. The apparatus of any one of claims 4 to 7, wherein said time and amplitude measurement device is one of a fully programmable gate array and a digital signal processor.

9. An apparatus for conducting eddy current testing of a test object comprising the steps of:
means for generating a digital drive signal;
means for converting said digital drive signal to an analog drive signal, said analog drive signal driving a coil in a probe;
means for placing said probe in proximity to a test object;
means for receiving an electromagnetic field generated by said test object, said electromagnetic field generating an analog return signal;
means for converting said analog return signal to a digital return signal;
means for determining the amplitude of said digital return signal;
means for determining the phase shift angle of said digital return signal based on the phase shift of said digital return signal compared to said digital drive signal;
means for determining the quadrature components of said digital return signal based on said digital return signal amplitude and said phase shift angle; and
means for analyzing said quadrature components of said digital return signal to determine a material characteristic of said test object.
